# FASCICULE DE BREVET EUROPEEN

(11) **EP 1 620 650 B1**
(45) Date de publication et mention de la délivrance du brevet: **04.04.2007**
(21) Numéro de dépôt: 04717129.3
(22) Date de dépôt: 04.03.2004
(51) Int. Cl.: F15B 13/042, F16K 11/16, G05G 9/04

(54) **DISTRIBUTEUR DE FLUIDE SOUS PRESSION A GUIDE DOUBLE**
DRUCKMITTELVERTEILER MIT DOPPELFÜHRUNG
DOUBLE-GUIDED FLUID DISTRIBUTOR UNDER PRESSURE

(30) Priorité: 05.05.2003 FR 0305459
(43) Date de publication de la demande: 01.02.2006
(73) Titulaire: Bosch Rexroth D.S.I., 69200 Venissieux (FR)
(72) Inventeur: BOUDOU, Jean-Luc, F-01390 Saint-André de Corcy (FR); LIGNEAU, Vincent, F-69780 Mions (FR)
(74) Mandataire: Maureau, Philippe
(86) Numéro de dépôt international: PCT/FR2004/000511
(87) Numéro de publication internationale: WO 2004/099627

(56) Documents cités:
- EP-A- 0 364 603
- FR-A- 2 056 464
- FR-A- 2 507 732

## Description

La présente invention a pour objet un distributeur de fluide sous pression, notamment un manipulateur pour engin de travaux publics. Ces distributeurs sont en particulier utilisés pour assurer le pilotage de différentes fonctions hydrauliques telles que la mise en mouvement de différents organes récepteurs installés à bord de ces engins de travaux publics.

De tels dispositifs de distribution hydraulique sont bien connus de l'homme du métier et sont décrits par exemple dans les documents FR-2 507 732, ou FR-2 376 978.

Un distributeur de fluide sous pression selon le préambule de la revendication 1 est connu du document FR 2 056 464.

Pour qu'une étanchéité de bonne qualité soit obtenue, il est nécessaire d'apporter un grand soin au montage des premier et deuxième joints d'étanchéité sur le guide. En effet, les guides couramment rencontrés possèdent des gorges qui sont usinées au niveau de leur surface extérieure et de leur surface intérieure, et dans lesquelles sont destinés à être insérés les joints. Ces gorges doivent être aptes à ne pas blesser les joints lors du montage. Ceci nécessite donc une bonne maîtrise de l'usinage et des côtes obtenues, engendrant des coûts de revient élevés.

La présente invention a pour but de remédier aux inconvénients précités en fournissant un distributeur de fluide dont le guide est obtenu de manière peu coûteuse, et dont le montage des joints d'étanchéité est simplifié. A cet effet, selon l'invention, un distributeur de fluide du type précité est essentiellement caractérisé en ce que les parties de guide supérieure et inférieure délimitent en outre mutuellement un second logement tourné vers le corps et dans lequel le deuxième joint d'étanchéité est emprisonné

Ainsi, grâce à ces dispositions, le distributeur de fluide possède un guide réalisé en deux parties de sorte que le montage des parties du guide et des joints d'étanchéité est réalisé par empilement successif. Ainsi, les risques d'endommager les joints lors du montage sont très réduits.

De préférence, le distributeur comprend des moyens d'immobilisation qui sont rapportés sur le corps, au niveau de la face supérieure dudit corps, pour permettre de bloquer en position au moins la partie de guide supérieure.

Encore de préférence, les moyens d'immobilisation comportent une bride de maintien qui est fixée sur la face supérieure du corps.

Encore de manière avantageuse, la partie de guide supérieure est venue de matière avec la bride de maintien.

Préférentiellement, la partie de guide inférieure au moins est réalisée dans l'un des matériaux choisis parmi la matière plastique, un alliage injecté, un matériau fritté et un matériau usiné.

D'autres caractéristiques et avantages de l'invention apparaîtront au cours de la description suivante de trois de ses formes de réalisation, données à titre d'exemples non limitatifs, en regard des dessins joints, sur lesquels :
La figure 1 est une vue en coupe longitudinale d'un distributeur de fluide selon l'état de la technique.
La figure 2 est une vue en coupe longitudinale d'un distributeur de fluide selon un premier mode de réalisation de la présente invention
La figure 3 est une vue en coupe longitudinale du guide équipant le distributeur de la figure 2.
La figure 4 est une vue similaire à celle de la figure 2, d'un deuxième mode de réalisation d'un distributeur selon la présente invention.

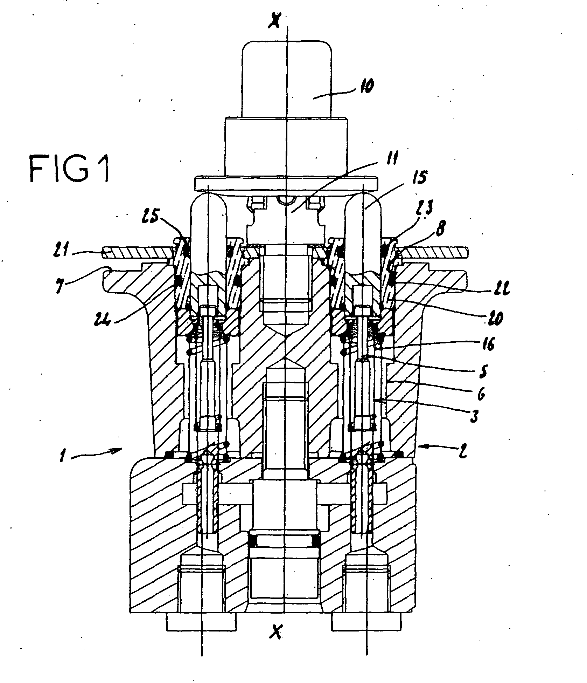

Le distributeur de fluide sous pression 1 représenté à la figure 1 est un distributeur appartenant à l'état de la technique. Le fluide délivré par ce distributeur est destiné à alimenter un organe récepteur aval non représenté, sous une pression qui est adaptée à l'utilisation de cet organe.

Comme cela est bien connu de l'homme du métier, le distributeur de fluide 1 comprend un corps 2 dans lequel sont montés au moins un et de préférence plusieurs réducteurs de pression 3. Même si seuls deux réducteurs sont représentés à la figure 1, ces distributeurs sont généralement équipés de quatre réducteurs de pression identiques les uns aux autres. Ces réducteurs sont généralement parallèles les uns aux autres et sont orientés selon l'axe longitudinal X-X du distributeur 1.

Chaque réducteur de pression-3 comprend un plongeur 5 qui est monté oscillant sensiblement selon une direction axiale parallèle à l'axe X-X, et qui se déplace dans une cavité 6 ménagée dans le corps 2 du distributeur 1. Cette cavité 6 possède une extrémité débouchante 8 au niveau d'une face supérieure 7 du corps 2.

Le tarage du réducteur de pression 3 est commandé par un opérateur au moyen d'une poignée 10 (partiellement représentée à la figure 1). Cette poignée 10 est montée basculante sur le corps 2, en regard de la face supérieure 7 de ce corps. Une articulation 11 par exemple du type à cardan, permet de solidariser la poignée 10 sur le corps 2. En variante, cette articulation est par exemple une articulation sphérique, ou bien encore une liaison à pivot.

Le réducteur de pression 3 comporte, encore de manière connue en soi, un poussoir 15 et un ressort de régulation 16. Le ressort de régulation est interposé entre le plongeur 5 et le poussoir 15 de sorte que l'équilibre du plongeur 5 dépend de la compression du ressort 16 imposée par l'enfoncement du poussoir 16 et la pression de régulation en sortie à délivrer vers l'organe récepteur (non représenté).

L'enfoncement du poussoir 15 est commandé par la poignée 10 de sorte qu'il possède un mouvement de va et vient à l'intérieur de l'extrémité supérieure 8 de la cavité 9.

Le fonctionnement d'un tel distributeur de fluide est bien connu de l'homme du métier et est par exemple décrit dans les documents précités.

Comme cela est encore bien connu, le guidage en translation du poussoir 15 est assuré au moyen d'un guide 20 qui prend la forme d'un manchon monobloc immobilisé au niveau de l'extrémité débouchante 8 de la cavité 6 au moyen d'une plaque de fermeture 21. Deux gorges périphériques 22 et 23 ont été usinées dans le guide 20, respectivement au niveau de la surface extérieure et de la surface intérieure de ce guide.

Dans la gorge périphérique extérieure 22, un joint torique 24 a été immobilisé pour assurer l'étanchéité entre le guide 20 et le corps 2 tandis qu'un joint à lèvres 25 est immobilisé dans la gorge 23 pour assurer l'étanchéité entre le poussoir 15 et le guide 20.

Un tel distributeur présente l'inconvénient de nécessiter un très bon usinage des gorges périphériques extérieure et intérieure du guide 20 pour que le joint torique 24 et le joint à lèvres 25 ne soient-pas endommagés lors de leur montage sur le guide. Cela nécessite une bonne maîtrise des côtes et de la qualité de la surface obtenue, engendrant un prix de revient élevé.

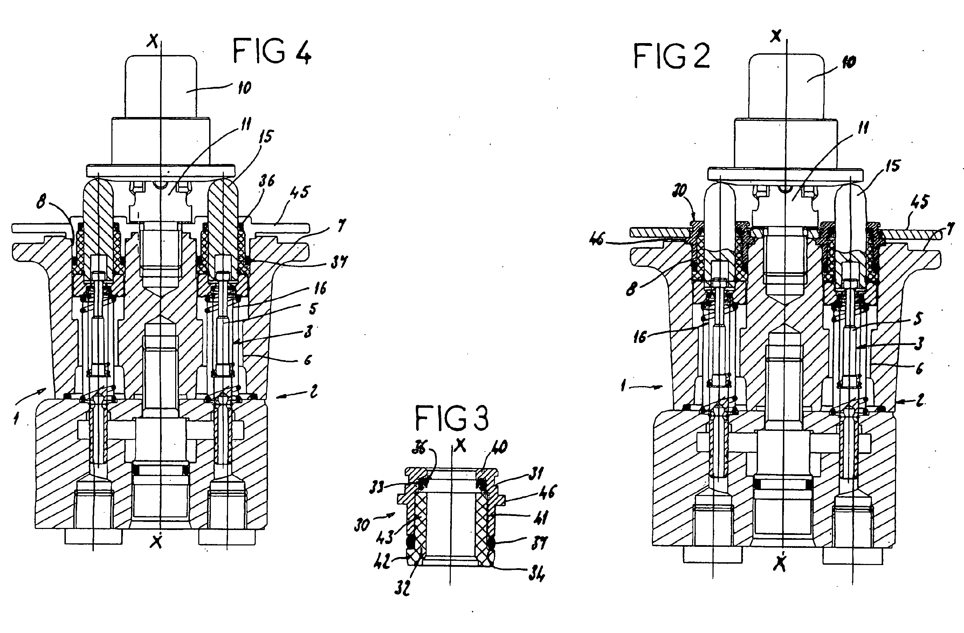

Au contraire, selon la présente invention, l'étanchéité du guide du poussoir est obtenue de manière simplifiée et donc moins onéreuse. Le distributeur selon la présente invention représenté aux figures 2 à 6 comporte les mêmes parties constitutives que celles décrites précédemment en ce qui concerne la fonction de régulation de pression. Les pièces constitutives identiques portent les mêmes références numériques. Seules seront décrites ci-après les parties constitutives du distributeur de pression selon la présente invention qui permettent le guidage du poussoir 15.

Selon une caractéristique essentielle de la présente invention, le poussoir 15 se déplace en mouvement de va et vient à l'intérieur d'un guide 30 qui est immobilisé au niveau de l'extrémité débouchante 8 de la cavité 6 du corps 2, et qui est réalisé en deux parties distinctes l'une de l'autre.

Le guide 30 comprend ainsi une partie de guide supérieure 31 et une partie de guide inférieure 32 qui sont rapportées l'une dans l'autre par emboîtement. Plus particulièrement, les deux parties 31 et 32 sont emboîtées selon l'axe X-X de sorte que l'une des parties pénètre dans l'autre en délimitant mutuellement intérieurement un premier logement 33 qui débouche intérieurement, en direction du poussoir 15. De même, l'interpénétration de la partie supérieure 31 avec la partie inférieure 32 du guide 30 délimite extérieurement un deuxième logement 34, qui est tourné à l'opposé du premier logement 33, en débouchant en direction du corps 2.

Comme le montre plus particulièrement la figure 3, la partie supérieure 31 possède une tête 40 et un corps 41, le diamètre intérieur de la tête 40 étant réduit par rapport à celui du corps 41. La partie inférieure 32 du guide 30 possède un pied 42 et une âme 43, le diamètre extérieur du pied 42 étant supérieur à celui de l'âme 43. La forme de l'âme 43 et la forme du corps 41 sont complémentaires de manière à ce que l'âme 43 puisse être manchonné à l'intérieur du corps 41, leur longueur respective étant adaptée pour délimiter les logements intérieur 33 et extérieur 34.

La partie inférieure 31 et la partie supérieure 32 du guide 30 sont de forme générale cylindrique, dont le diamètre intérieur est sensiblement égal au diamètre du poussoir 15.

On comprend ainsi que les parties inférieure et supérieure du guide possèdent de simples épaulements par changement de diamètre, de sorte qu'aucune gorge n'est usinée pour insérer le premier joint d'étanchéité 36 et le deuxième joint d'étanchéité 37 qui assurent respectivement l'étanchéité intérieure et extérieure du guide 30 par rapport au poussoir 15 et au corps 2.

Le distributeur de fluide 1 comprend par ailleurs des moyens d'immobilisation 45 qui sont rapportés sur le corps 2, au niveau de la face supérieure 7 de ce corps pour bloquer en position la partie de guide inférieure 32 en venant en appui contre une collerette 46 appartenant à la partie de guide supérieure 31.

Les moyens d'immobilisation 45 prennent par exemple la forme d'une bride de maintien fixée par vissage sur la face supérieure 7 de ce corps 2.

Préalablement à l'immobilisation du guide 30 dans la cavité 6 du corps 2, on réalise simplement l'empilement de la partie inférieure 32 du guide 30, du deuxième joint d'étanchéité 37, et de la partie supérieure 31 du guide 30 en ayant au préalable positionné le premier joint d'étanchéité 36 à l'intérieur de l'épaulement de cette partie supérieure. L'ensemble est ensuite immobilisé au moyen de la bride 45 à l'intérieur de la cavité 6.

Le guide selon la présente invention est ainsi obtenu sans risquer d'endommager les deux joints d'étanchéité, et en minimisant les coûts de revient des usinages.

Dans le deuxième mode de réalisation du guide 30 représenté à la figure 4, la partie supérieure 31 du guide 30 est venue de matière avec la bride 45. On minimise ainsi le nombre de parties constitutives réalisant le guidage du poussoir 15 dans la mesure où lors de l'assemblage, la partie supérieure du guide est solidaire de la bride 45. Comme précédemment, le joint d'étanchéité extérieur 37 est placé contre l'épaulement de la partie inférieure 32 du guide 30 tandis que le joint d'étanchéité intérieur 36 est placé à l'intérieur de l'épaulement porté par la bride de maintien 45, la partie inférieure 32 étant ensuite emboîtée dans la bride 45.

Comme il va de soi, l'invention ne se limite pas aux formes de réalisation décrites ci-dessus à titre d'exemples non limitatifs, elle en embrasse au contraire toutes les variantes de réalisation dans le cadre des revendications ci-après.

## Revendications

1. Distributeur de fluide sous pression, notamment manipulateur pour engin de travaux publics du type comportant :
- un corps (2) qui comprend au moins une cavité (6) dont une extrémité (8) est débouchante sur au moins une face supérieure (7) du corps (2),
- au moins un réducteur de pression (3) qui est monté dans le corps (2), et qui comprend un poussoir (15) qui est logé en mouvement de va-et-vient dans ladite au moins une cavité (6) du corps (2) selon une direction axiale (X-X), et un plongeur (5) qui est monté oscillant sensiblement selon la même direction axiale pour assurer la fonction de réducteur de pression, et un ressort de régulation (16) interposé entre le plongeur (5) et le poussoir (15), l'équilibre du plongeur (5) dépendant de la compression du ressort (16) imposée par l'enfoncement du poussoir (15) et la pression de régulation en sortie à délivrer vers un organe récepteur aval,
- une poignée (10) qui est montée basculante par rapport au corps (2), en regard de la face supérieure (7) dudit corps (2) pour commander le mouvement de va-et-vient dudit au moins un poussoir (15),
- au moins un guide (30) dans lequel se déplace le poussoir (15), qui est immobilisé dans la cavité (6), au niveau de l'extrémité débouchante (8), et qui comprend au moins une partie de guide supérieure (31) et une partie de guide inférieure (32) qui sont rapportées l'une sur l'autre par emboîtement,
- au moins un premier (36) et un deuxième (37) joints d'étanchéité qui assurent respectivement l'étanchéité hydraulique intérieurement et extérieurement au guide (30), lesdites parties de guide supérieure (31) et inférieure (32) délimitant mutuellement un premier logement (33) tourné vers le poussoir (15), dans lequel est emprisonné le premier joint d'étanchéité (36)
**caractérisé en ce que** les parties de guide supérieure (31) et inférieure (32) délimitent en outre mutuellement un second logement (34) tourné vers le corps (2) et dans lequel le deuxième joint (37) d'étanchéité est emprisonné.

2. Distributeur de fluide selon la revendication 1, **caractérisé en ce qu'**il comprend des moyens d'immobilisation (45) qui sont rapportés sur le corps (2), au niveau de la face supérieure (7) dudit corps (2), pour permettre de bloquer en position au moins la partie de guide supérieure (31).

3. Distributeur de fluide selon la revendication 2, **caractérisé en ce que** les moyens d'immobilisation (45) comportent une bride de maintien fixée sur la face supérieure (7) du corps (2).

4. Distributeur de fluide selon l'une des revendications 1 à 3, **caractérisé en ce que** la partie de guide supérieure (31) est venue de matière avec la bride de maintien (45).

5. Distributeur de fluide selon l'une quelconque des revendications 1 à 4, **caractérisé en ce que** la partie de guide inférieure (32) au moins est réalisée dans l'un des matériaux choisis parmi la matière plastique, un alliage injecté, un matériau fritté, et un matériau usiné.

## Claims

1. Pressurized fluid distributor, particularly a manipulator for public works equipment, of the type having:
- a body (2) comprising at least one cavity (6), one end (8) of which opens on to at least one upper face (7) of the body (2),
- at least one pressure reducer (3) which is mounted in the body (2), and which comprises a push rod (15) which is housed so that it can oscillate in the said at least one cavity (6) of the body (2) in an axial direction (X-X), and a plunger (5) which is mounted so that it can oscillate substantially in the same axial direction to act as a pressure reducer, and a control spring (16) interposed between the plunger (5) and the push rod (15), the equilibrium of the plunger (5) depending on the compression of the spring (16) produced by the depression of the push rod (15) and the output control pressure to be delivered to a downstream receiving member,
- a knob (10) which is mounted so that it can swing with respect to the body (2), facing the upper face (7) of the said body (2), to control the oscillating movement of the said at least one push rod (15),
- at least one guide (30), in which the push rod (15) moves, which is fastened in the cavity (6) at its open end (8), and which comprises at least an upper guide part (31) and a lower guide part (32) which are fitted into each other,
- at least a first (36) and a second (37) sealing gasket, which provide a hydraulic seal, respectively, inside and outside the guide (30), the said upper guide part (31) and lower guide part (32) delimiting between them a first housing (33) facing the push rod (15), in which the first sealing gasket (36) is trapped,
**characterized in that** the upper guide part (31) and lower guide part (32) also delimit between them a second housing (34) which faces the body (2) and in which the second sealing gasket (37) is trapped.

2. Fluid distributor according to Claim 1, **characterized in that** it comprises fastening means (45) which are attached to the body (2) on the upper face (7) of the said body (2), to enable at least the upper guide part (31) to be locked in position.

3. Fluid distributor according to Claim 2, **characterized in that** the fastening means (45) include a securing flange fixed to the upper face (7) of the body (2).

4. Fluid distributor according to any one of Claims 1 to 3, **characterized in that** the upper guide part (31) is made in one piece with the securing flange (45).

5. Fluid distributor according to any one of Claims 1 to 4, **characterized in that** at least the lower guide part (32) is made from any one material chosen from the following: plastics material, injected alloy, sintered material and machined material.

## Patentansprüche

1. Verteiler für unter Druck stehende Flüssigkeit, insbesondere ein Manipulator für Tiefbaumaschinen des Typs, der folgendes umfasst:
- einen Körper (2), der mindestens einen Hohlraum (6) hat, dessen eines Ende (8) an mindestens einer Oberseite (7) des Körpers (2) mündet,
- mindestens einen Druckminderer (3), der im Körper (2) montiert ist und der einen Stößel (15) hat, der so gelagert ist, dass er eine Hin- und HerBewegung in einer Axialrichtung (X-X) in diesem, mindestens einem, Hohlraum (6) des Körpers (2) ausführen kann, sowie einen Tauchkolben (5), der in der im wesentlichen gleichen Axialrichtung pendelnd montiert ist, um die Funktion als Druckminderer zu erfüllen, sowie eine Regulierfeder (16), die zwischen dem Tauchkolben (5) und dem Stößel (15) eingefügt ist, wobei die Gleichgewichtslage des Tauchkolbens (5) abhängt von der durch das Eintauchen des Stößels (15) bewirkten Komprimierung der Feder (16) und von dem Ausgangs-Regulierungsdruck, der zu einer nachfolgenden aufnehmenden Vorrichtung hin abgegeben werden soll,
- einen Griff (10), der in Bezug auf den Körper (2) kippbar montiert ist, und zwar gegenüber der Oberseite (7) des Körpers (2), um die Hin- und HerBewegung des, mindestens einen, Stößels (15) zu bewirken,
- mindestens eine Führung (30), in der sich der Stößel (15) bewegt, die in dem Hohlraum (6) im Bereich des Mündungsendes (8) verriegelt ist und die mindestens einen oberen Führungs-Teil (31) und einen unteren Führungs-Teil (32) hat, die ineinandergesteckt sind,
- mindestens eine erste (36) und eine zweite (37) Dichtung, die jeweils die hydraulische Dichtigkeit der Führung (30) innen und außen gewährleisten, wobei der obere Teil (31) und der untere Teil (32) der Führung gegenseitig eine erste Aufnahme (33) abgrenzen, die zum Stößel (15) hin gewendet ist, und in der die erste Dichtung (36) eingeschlossen ist,
**dadurch gekennzeichnet, dass** der obere Teil (31) der Führung und der untere Teil (32) der Führung außerdem gegenseitig eine zweite Aufnahme (34) abgrenzen, die zum Körper (2) hin gewendet ist, und in der die zweite Dichtung (37) eingeschlossen ist.

2. Flüssigkeitsverteiler nach Anspruch 1, **dadurch gekennzeichnet, dass** er Vorrichtungen (45) zur Fixierung umfasst, die in Höhe der Oberseite (7) des Körpers (2) am Körper eingesetzt sind, damit zumindest der obere Teil (31) der Führung in seiner Stellung fixiert werden kann.

3. Flüssigkeitsverteiler nach Anspruch 2, **dadurch gekennzeichnet, dass** die Mittel (45) zur Fixierung einen Haltering umfassen, der auf der Oberseite (7) des Körpers (2) befestigt ist.

4. Flüssigkeitsverteiler nach einem der Ansprüche 1 bis 3, **dadurch gekennzeichnet, dass** der obere Teil (31) der Führung mit dem Haltering (45) aus einem Material gefertigt ist.

5. Flüssigkeitsverteiler nach einem der Ansprüche 1 bis 4, **dadurch gekennzeichnet, dass** zumindest der untere Teil (32) der Führung aus einem von zur Wahl stehenden Materialien, nämlich Kunststoff, eine Spritzguss-Legierung, ein Sinterwerkstoff oder ein bearbeitetes Material, hergestellt ist.
